# EUROPÄISCHE PATENTSCHRIFT

(11) **EP 2 619 030 B1**
(45) Veröffentlichungstag und Bekanntmachung des Hinweises auf die Patenterteilung: **20.11.2013**
(21) Anmeldenummer: 11749355.1
(22) Anmeldetag: 26.08.2011
(51) Int. Cl.: B60N 2/50, B60N 2/52

(54) **FAHRZEUGSITZ, INSBESONDERE NUTZFAHRZEUGSITZ**
VEHICLE SEAT, ESPECIALLY UTILITY VEHICLE SEAT
SIÈGE DE VÉHICULE, NOTAMMENT SIÈGE DE VÉHICULE UTILITAIRE

(30) Priorität: 20.09.2010 DE 102010046489
(43) Veröffentlichungstag der Anmeldung: 31.07.2013
(73) Patentinhaber: Keiper GmbH & Co. KG, 67657 Kaiserslautern (DE)
(72) Erfinder: WILHELM, Wolfgang, 68542 Heddesheim (DE); REICHEL, Uwe, 66879 Kottweiler-Schwanden (DE)
(74) Vertreter: Wilhelm, Wolfgang
(86) Internationale Anmeldenummer: PCT/EP2011/004301
(87) Internationale Veröffentlichungsnummer: WO 2012/038019

(56) Entgegenhaltungen:
- DE-A1-102006 017 774
- GB-A- 2 309 894

## Beschreibung

Die Erfindung betrifft einen Fahrzeugsitz, insbesondere Nutzfahrzeugsitz, mit den Merkmalen des Oberbegriffs des Anspruches 1.

Bekannte Fährzeugsitze dieser Art sind beipielsweise in der DE 28 49 700 A1, der DE 33 33 604 A1, der DE 43 35 199 C1, der US 4,946,145 oder der DE 10 2006 017 774 A1 beschrieben. Für die Niveauregulierung ist jeweils ein Regelkreis vorgesehen, welcher aus dem Scherengestell, der Gasfeder und der Steuereinrichtung samt Mitnehmer, Schaltelement und Ventileinrichtung besteht. Der Mitnehmer und die Ventileinrichtung sind an relativ zueinander beweglichen Teile des Fahrzeugsitzes angeordnet. Weicht der Istwert der Höhe vom Sollwert ab, in der Regel aufgrund einer Auslenkung des Sitzgestells, wird die Gasfeder so angesteuert, dass sie der Auslenkung entgegenwirkt, und der Istwert wieder den Sollwert erreicht. Für die Höheneinstellung wird in Abhängigkeit der neu einzustellenden Höhe der Sollwert geändert, so dass die Niveauregulierung den aktuellen Istwert als Abweichung vom Sollwert behandelt und das Scherengestell in die gewünschte neue Höhe bringt. Bei der technischen Umsetzung zeigen die bekannten Fahrzeugsitze einen teilweise komplizierten Aufbau. Zudem wäre eine Erhöhung der Genauigkeit der Niveauregulierung und der Höheneinstellung wünschenswert.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die kinematische Zuordnung des drehbaren Schaltelementes und der Ventileinrichtung zur ersten Schwinge ermöglicht sowohl eine vormontierte und optional prüffähige Baugruppe als auch eine Anordnung an einer bezüglich des vorhandenen Bauraums geeigneten Stelle beabstandet von der Scherenachse. Die Ausbildung des Mitnehmers als Bowdenzug ermöglicht sowohl eine einfache kinematische Zuordnung des Mitnehmers zur zweiten Schwinge, indem die Hülle fest mit der zweiten Schwinge verbunden ist, als auch eine einfache Einstellung des Mitnehmers für eine Änderung des Sollwertes der Höhe, was mittels der Niveauregulierung zur Höheneinstellung führt.

Gegenüber anderen möglichen Zuordnungen zu Teilen des Scherengestells, beispielsweise zu den Rahmen, erhöht die erfindungsgemäße kinematische Zuordnung die erfassbare Auslenkung bei der Schwingung des Scherengestells und damit die Messgenauigkeit des Istwertes der Höhe, was letztendlich sowohl die Niveauregulierung als auch die Höheneinstellung verbessert. Dabei soll unter der kinematischen Zuordnung verstanden werden, dass die einander kinematisch zugeordneten Bauteile sich zusammen bewegen, also eine kinematische Einheit oder Baugruppe bilden, was durch feste Verbindungen oder kraftschlüssige Kopplungen erreicht werden kann.

Im folgenden ist die Erfindung anhand eines in der Zeichnung dargestellten Ausführungsbeispiels und einer Abwandlung näher erläutert. Es zeigen
- Fig. 1: eine perspektivische Ansicht eines Scherengestells mit einer Steuereinrichtung,
- Fig. 2: eine Ansicht der Ventileinrichtung und des Schaltelementes,
- Fig. 3: eine Teilansicht der Ventileinrichtung und des Schaltelementes,
- Fig. 4: eine perspektivische Teilansicht des Scherengestells,
- Fig. 5: eine perspektivische Ansicht eines Teils der Umlenkrolle,
- Fig. 6: eine schematische Seitenansicht des Scherengestells in einer oberen Höhenposition,
- Fig. 7: eine Fig. 6 entsprechende Seitenansicht nach einer Auslenkung des Scherengestells nach unten,
- Fig. 8: eine schematische Seitenansicht des Scherengestells in einer unteren Höhenposition,
- Fig. 9: eine Fig. 8 entsprechende Seitenansicht nach einer Betätigung und Drehung des Schaltelementes,
- Fig. 10: eine schematische Seitenansicht eines Fahrzeugsitzes, und
- Fig. 11: eine Seitenansicht einer Steuereinrichtung gemäß einer Abwandlung.

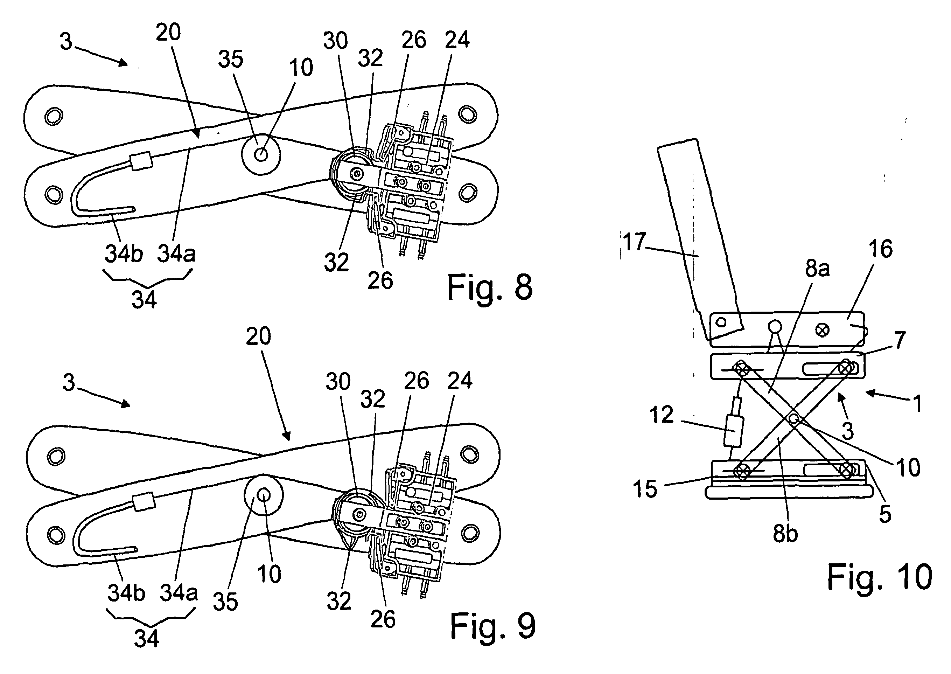

Ein Fahrzeugsitz 1 (Fig. 10) für ein Nutzfahrzeug oder ein anderes Kraftfahrzeug weist ein Scherengestell 3 auf, welches einen Unterrahmen 5, einen oberhalb desselben angeordneten Oberrahmen 7 und beidseitig je ein Paar gekreuzter Schwingen 8a und 8b umfasst. Eine Scherenachse 10 verbindet die beiden Kreuzungspunkte und definiert zugleich die Achse, um welche die Schwingen 8a und 8b relativ zueinander schwenken können. Die Schwingen 8a und 8b sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8a und 8b ändert sich die Höhe des Oberrahmens 7 über dem Unterrahmen 5, im folgenden kurz als Höhe des Scherengestells 3 bezeichnet. Mittels einer Gasfeder 12 und vorzugsweise einem Dämpfer wird das Scherengestell 3 ein schwingfähiges System, welches den Sitzkomfort erhöht.

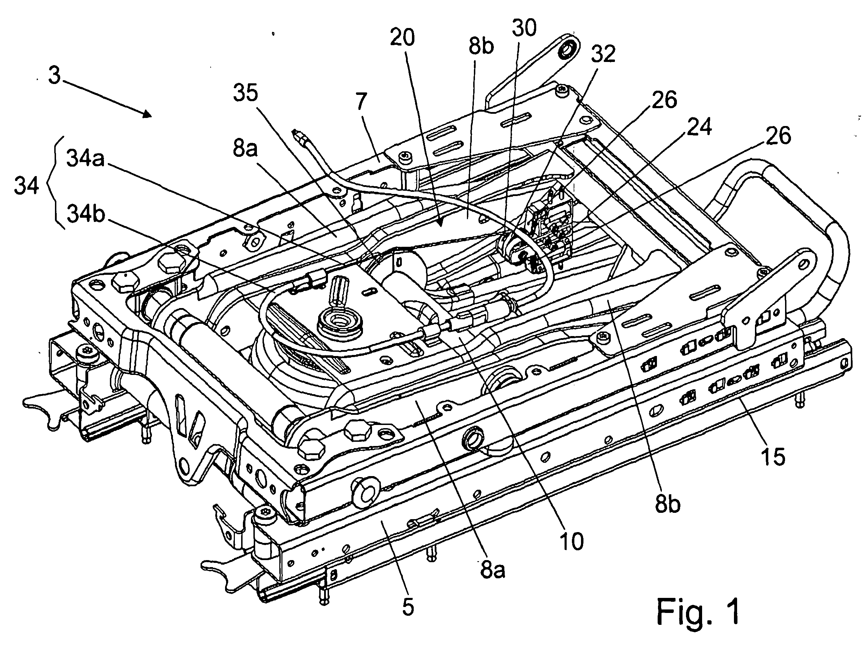

Das Scherengestell 3 (Fig. 1) ist vorliegend mittels Sitzschienen 15 in Sitzlängsrichtung verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 (oder alternativ am Oberrahmen 7) - vorliegend neigungseinstellbar - angebracht ist.

Die beiden Paare gekreuzter Schwingen 8a und 8b umfassen jeweils eine erste Schwinge 8a, welche außen angeordnet ist, und eine zweite Schwinge 8b, welche innen angeordnet ist. Die beiden ersten Schwingen 8a sind jeweils an ihren Enden miteinander mittels Querrohren verbunden. Die beiden zweiten Schwingen 8b sind ebenfalls jeweils an ihren Enden miteinander mittels Querrohren und mittig mittels der ebenfalls als Rohr ausgebildeten Scherenachse 10 verbunden. Die vorderen Querrohre lagern jeweils die Rollen. Im Ausführungsbeispiels sind die beiden zweiten Schwingen 8b zusätzlich mittels eines Querblechs verbunden, welches beabstandet von der Scherenachse 10 und vom unteren Querrohr angeordnet ist.

Eine Steuereinrichtung 20 dient sowohl zur Niveauregulierung, d.h. einer Beibehaltung der eingestellten Höhe des Scherengestells 3 während des Fahrbetriebs, als auch zur Höheneinstellung des Scherengestells 3.

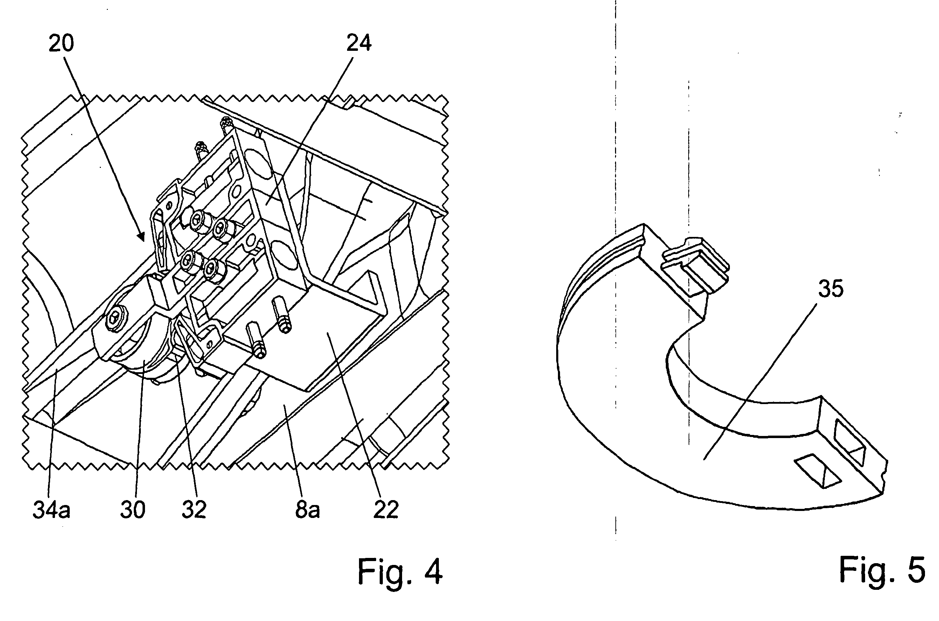

Die Steuereinrichtung 20 weist einen Träger 22 auf, welcher fest mit den ersten Schwingen 8a verbunden ist. Der Träger 22 kann einteilig oder mehrteilig ausgebildet sein. Die Form des Trägers 22 ist auf den konkreten Einsatz abgestimmt, beispielsweise indem der Träger 22 - gegebenenfalls mehrfach - abgewinkelt ist, beispielsweise um von den außen angeordneten ersten Schwingen 8a in den Bereich zwischen den beiden zweiten Schwingen 8b zu ragen. Vorliegend ist der Träger 22 an der in Fahrtrichtung linken ersten Schwinge 8a auf deren Innenseite befestigt, und zwar beabstandet von der Scherenachse 10 an einer Stelle, die auch in der untersten Einstellung der Höhe des Scherengestells 3 noch unterhalb der zweiten Schwinge 8b liegt, also in der Nähe des vorderen, unteren Endes der ersten Schwinge 8a (Fig. 4). Alternativ ist der Träger 22 am unteren Querrohr zwischen den beiden ersten Schwingen 8a befestigt. Der Träger 22 ragt nach innen, so dass sein freies Ende in Sitzquerrichtung zwischen den beiden zweiten Schwingen 8b angeordnet ist.

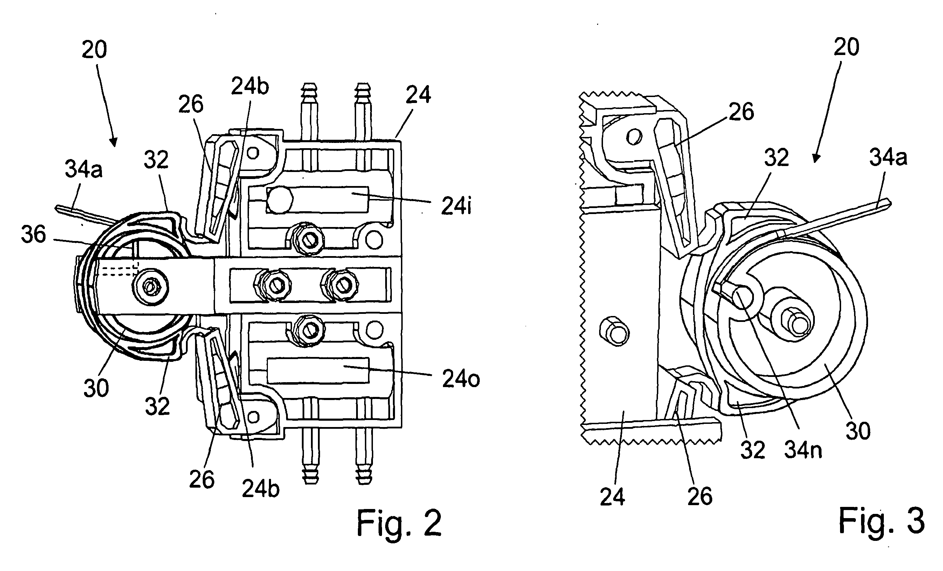

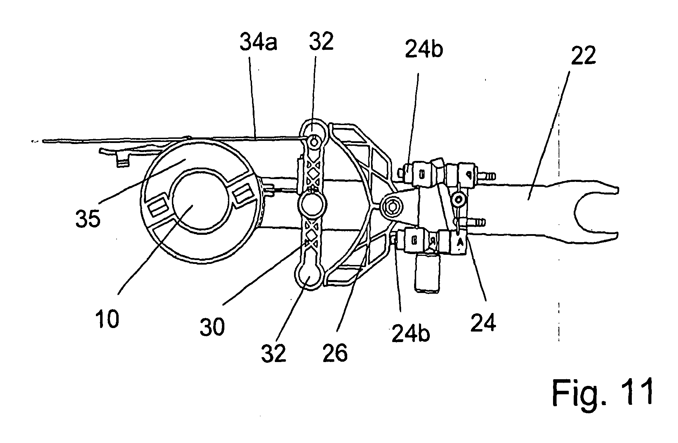

Am Träger 22 ist eine Ventileinrichtung 24 befestigt (Fig. 2), welche zwei Ventile zur Ansteuerung der Gasfeder 12 aufweist, nämlich ein Einlassventil 24i und ein Auslassventil 24o. Als Ventiltypen kommen sogenannte Sitzventile oder Schieberventile in Frage. Das Einlassventil 24i und das Auslassventil 24o können jeweils zwei Anschlüsse (einer zur Gasfeder 12 und der andere zur Druckluft bzw. zum Ausblasen) aufweisen, wie in Fig. 1 bis 9 dargestellt. Alternativ sind das Einlassventil 24i und das Auslassventil 24o so zu einer Einheit verschaltet, dass nur drei Anschlüsse (Gasfeder 12, Druckluft, Ausblasen) vorhanden sind, wie in Fig. 11 dargestellt.

Für jedes der beiden Ventile ragt ein beweglicher Stößel 24b aus dem Gehäuse der Ventileinrichtung 24. Durch Beaufschlagen des Stößels 24b ist das zugeordnete Ventil zu betätigen. Die Ventileinrichtung 24 weist zum Beaufschlagen der Stößel 24b wenigstens einen Steuerhebel 26 auf, welcher schwenkbar am Gehäuse der Ventileinrichtung 24 oder am Träger 22 angelenkt ist. Im Ausführungsbeispiel (Fig. 1 bis 10) ist für jeden Stößel 24b genau ein Steuerhebel 26 vorgesehen. In einer Abwandlung (Fig. 11) ist ein einziger Steuerhebel 26 vorgesehen, welcher in der Form einer Wippe oder eines Schmetterlings beide Stößel 24b alternativ beaufschlagen kann.

Um die Steuerhebel 26 anzusteuern, also zu schwenken und damit die Stößel 24b zu beäufschlagen, weist die Steuereinrichtung 20 ein Schaltelement 30 auf, welches am Träger 22 oder am Gehäuse (oder einer Klammer) der Ventileinrichtung 24 um eine zur Scherenachse 10 parallel versetzte Drehachse drehbar gelagert ist (Fig. 2). Das Schaltelement 30 weist einen scheibenförmigen Grundkörper und zwei Schaltnocken 32 auf. Die Schaltnocken 32 können angeformt, d.h. einstückig mit dem Grundkörper des Schaltelements 30 ausgebildet, oder separat ausgebildet und am Grundkörper des Schaltelements 30 befestigt sein. Die Schaltnocken 32 sind vorliegend radial außen am Schaltelement 30 vorgesehen, können aber beispielsweise auch parallel zur Drehachse des Schaltelements 30 von dessen Stirnseite abstehen. Um die Steuerhebel 26 anzusteuern, ist das Schaltelement 30 zu drehen. Mittels der Drehung des Schaltelements 30 beaufschlagt - in Abhängigkeit der Drehrichtung - jeweils genau einer der Schaltnocken 32 genau einen von zwei Steuerhebeln 26 (wenn zwei Steuerhebel 26 vorgesehen sind) oder einen Kulissenabschnitt des einzigen Steuerhebels 26 (wenn ein Steuerhebel 26 vorgesehen ist). Wenn der Schaltnocken 32 den Steuerhebel 26 beaufschlagt, beaufschlagt dieser den Stößel 24b, und zwar (wenigstens näherungsweise) querkraftfrei, d.h. ohne tangentiale Komponente bezüglich des Schaltelements 30. Die Steuerhebel 26 können am freien Ende einen Federarm aufweisen, welcher ständig in Kontakt mit dem zugeordneten Schaltnocken 32 steht, jedoch ohne dass der am Ventilstößel 24b ohne Beaufschlagung anliegende Steuerhebel 26 geschwenkt wird. Alternativ ist der Steuerhebel 26 im Abstand vom Ventilstößel 24b angeordnet. Die Baugruppe mit dem Träger 22 (oder einem Teil des Trägers 22), der Ventileinrichtung 24 und dem Schaltelement 30 ist vorzugsweise vormontiert und stellt optional eine prüffähige Einheit dar.

Die Steuereinrichtung 20 weist ferner einen als Bowdenzug ausgebildeten Mitnehmer 34 mit einer Seele 34a und einer Hülle 34b auf. Die Hülle 34b ist fest mit den zweiten Schwingen 8b verbunden, im Ausführungsbeispiel am Querblech zwischen den beiden zweiten Schwingen 8b abgestützt und festgeklammert. Die Seele 34a ist an einem Ende mit einem Betätigungselement (nicht dargestellt) für die Steuereinrichtung 20 verbunden, welches im Bereich des Sitzrahmens 16 oder des Oberrahmens 7 angeordnet ist. Zum anderen Ende hin ist die Seele 34a nach dem Verlassen der Hülle 34b über eine Umlenkrolle 35 geführt, welche drehbar auf der Scherenachse 10 gelagert ist, und weiter zum Schaltelement 30 geführt, welches mit der Seele 34a (direkt) gekoppelt ist. Der Außendurchmesser der Umlenkrolle 35 entspricht vorzugsweise wenigstens näherungsweise demjenigen des scheibenförmigen Grundkörpers des Schaltelements 30, so dass die Seele 34a wenigstens näherungsweise tangential zum Schaltelement 30 gelangt. Die Umlenkrolle 35 kann aus zwei halbbogenförmigen Teilen (Fig. 5) zusammengefügt sein, welche die Scherenachse 10 zusammen umschließen. Diese beiden halbbogenförmigen Teile können beispielsweise miteinander verclipst sein.

Zur Kopplung des Schaltelementes 30 mit der Seele 34a des Mitnehmers 34 kann die Seele 34a am Schaltelement 30 befestigt sein (wie im Ausführungsbeispiel), beispielsweise indem der (vorliegend tonnenförmige) Nippel 34n an selbigem Ende der Seele 34a in eine passende Aufnahme des Schaltelements 30 eingreift (Fig. 3). Alternativ kann die Kopplung des Schaltelementes 30 mit der Seele 34a mit einem Leerweg auf Mitnahme ausgebildet sein, beispielsweise indem der Nippel 34n an selbigem Ende der Seele 34a in einem (bogenförmigen) Langloch des Schaltelementes 30 geführt ist. Der Nippel 34n kann durch elastische Elemente in der Mitte des Langlochs gehalten werden. Kleinere Auslenkungen haben dadurch keine Auswirkung auf die Niveauregulierung (welche also eine Hysterese zeigt). Vorzugsweise ist die Seele 34a vor ihrem am Schaltelement 30 befestigten Ende ein Stück weit (in Umfangsrichtung) um das Schaltelement 30 gewunden, beispielsweise axial neben einem der Schaltnocken 32 und in einer Ringnut des Schaltelements 30 liegend.

Im unbetätigten Zustand fixiert das Betätigungselement den Mitnehmer 34, d.h. es hält die Seele 34a einerseits und die Hülle 34b (und die zweite Schwinge 8b) andererseits in fester Relativposition zueinander. Die Länge des über die Hülle 34b überstehenden Teils der Seele 34a, im folgenden kurz als Überstandslänge bezeichnet, nimmt einen bestimmten Wert ein. Am Schaltelement 30 ist im Ausführungsbeispiel eine Rückstellfeder 36 angeordnet, beispielsweise eine Spiralfeder, Schenkelfeder oder Zugfeder. Die Rückstellfeder 36 ist zwischen einerseits dem Schaltelement 30 und andererseits wenigstens mittelbar der erste Schwinge 8a, vorzugsweise dem Träger 22, wirksam. Die Rückstellfeder 36 beaufschlagt das Schaltelement 30 in diejenige Drehrichtung, welche einem Moment aufgrund einer Zugkraft in der Seele 34a entgegenwirkt. Die Rückstellfeder 36 hält somit die Seele 34a relativ zur Hülle 34b straff. Bei Betätigung verschiebt das Betätigungselement die Seele 34a relativ zur Hülle 34b, wodurch sich die Überstandslänge der Seele 34a ändert.

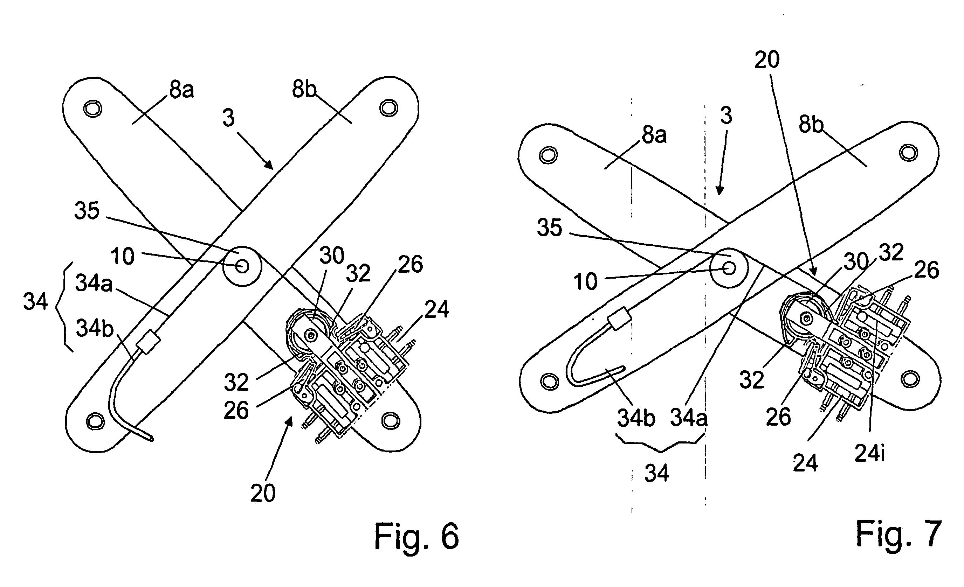

Von den beiden Funktionen der Steuereinrichtung 20 wirkt die Niveauregulierung im Gebrauch des Fahrzeugsitzes 1 wie folgt: In einer Ausgangsstellung ist das Scherengestell 3 in einer bestimmten Höhe eingestellt, beispielsweise in einer oberen Position (Fig. 6). Auslenkungen des schwingfähigen Scherengestells 3, beispielsweise aufgrund von Fahrbahnunebenheiten, führen dazu, dass die Schwingen 8a und 8b relativ zueinander schwenken. Da die Überstandslänge der Seele 34a mittels des Mitnehmers 34 relativ zu den zweiten Schwingen 8b beibehalten wird, dreht sich das an die Seele 34a gekoppelte Schaltelement 30 relativ zu den ersten Schwingen 8a und damit zur Ventileinrichtung 24 mit den Steuerhebeln 26. Damit beaufschlagt - entsprechend der Richtung der Auslenkung des Scherengestells 3 und damit der Drehrichtung des Schaltelements 30 - einer der beiden Schaltnocken 32 den zugeordneten Steuerhebel 26, worauf dieser den zugeordneten Stößel 24b der Ventileinrichtung 24 betätigt (Fig. 7). Je nach Richtung der Auslenkung wird entweder mittels des Einlassventils 24i die Gasfeder 12 belüftet (bei einer Auslenkung nach unten, wie in Fig. 7) oder mittels des Auslassventils 24o die Gasfeder 12 entlüftet (bei einer Auslenkung nach oben). Dies wirkt dann der Auslenkung entgegen. Die Schwingen 8a und 8b, die Steuereinrichtung 20 und die Gasfeder 12 bilden einen Regelkreis, welcher das Scherengestell 3 auf die eingestellte Höhe als Sollwert regelt.

Die andere Funktion der Steuereinrichtung 20, also die Höheneinstellung, wirkt wie folgt: In einer Ausgangsstellung ist das Scherengestell 3 in einer bestimmten Höhe eingestellt, beispielsweise in einer unteren Position (Fig. 8). Eine Betätigung des Betätigungselementes der Steuereinrichtung 20 verschiebt beim Mitnehmer 34 die Seele 34a relativ zur Hülle 34b. Bei einem Zug verkürzt sich die Überstandslänge der Seele 34a, bei einem Nachlassen verlängert die Rückstellfeder 36 die Überstandslänge der Seele 34a. Die Seele 34a dreht dadurch das Schaltelement 30, womit einer der beiden Schaltnocken 32 den zugeordneten Steuerhebel 26 beaufschlagt (Fig. 9). Dies wirkt sich genauso aus, als ob die Schwingen 8a und 8b relativ zueinander schwenken würden, d.h. die Ventileinrichtung 24 wird betätigt, um der vermeintlichen Auslenkung entgegen zu wirken. Eine Verkürzung der Überstandslänge bewirkt eine Betätigung des Auslassventils 24o (für eine Höheneinstellung nach unten), eine Verlängerung der Überstandslänge (Fig. 9) bewirkt eine Betäigung des Einlassventils 24i (für eine Höheneinstellung nach oben). Der Regelkreis regelt nun auf die neu eingestellte Höhe als Sollwert, so dass das Scherengestell 3 beispielsweise in eine obere Position gelangt (Fig. 6).

### Bezugszeichenliste

- 1: Fahrzeugsitz
- 3: Scherengestell
- 5: Unterrahmen
- 7: Oberrahmen
- 8a: erste Schwinge
- 8b: zweite Schwinge
- 10: Scherenachse
- 12: Gasfeder
- 15: Sitzschiene
- 16: Sitzrahmen
- 17: Lehne
- 20: Steuereinrichtung
- 22: Träger
- 24: Ventileinrichtung
- 24b: Stößel
- 24i: Einlassventil
- 24o: Auslassventil
- 26: Steuerhebel
- 30: Schaltelement
- 32: Schaltnocken
- 34: Mitnehmer
- 34a: Seele
- 34b: Hülle
- 34n: Nippel
- 35: Umlenkrolle
- 36: Rückstellfeder

## Patentansprüche

1. Fahrzeugsitz, insbesondere Nutzfahrzeugsitz, mit
a) einem Scherengestell (3), welches schwingfähig und höheneinstellbar ist, mit einer Gasfeder (12) und wenigstens einem Paar von Schwingen (8a, 8b), welche sich an einer Scherenachse (10) kreuzen, und
b) einer Steuereinrichtung (20) zur Niveauregulierung und zur Höheneinstellung des Scherengestells (3), welche einen Mitnehmer (34), ein mit dem Mitnehmer (34) gekoppeltes Schaltelement (30) und eine vom Schaltelement (30) ansteuerbare Ventileinrichtung (24) zur Ansteuerung der Gasfeder (12) aufweist, wobei der Mitnehmer (34) und die Ventileinrichtung (24) verschiedenen, relativ zu einander beweglichen Teilen des Scherengestells (3) kinematisch zugeordnet sind,
**dadurch gekennzeichnet, dass**
c) das Schaltelement (30) von der Scherenachse (10) beabstandet an der ersten Schwinge (8a) drehbar gelagert ist,
d) die Ventileinrichtung (24) fest mit der ersten Schwinge (8a) verbunden ist, und
e) der Mitnehmer (34) als Bowdenzug ausgebildet ist, dessen Seele (34a) mit dem Schaltelement (30) gekoppelt und dessen Hülle (34b) fest mit der zweiten Schwinge (8b) verbunden ist.

2. Fahrzeugsitz nach Anspruch 1, **dadurch gekennzeichnet, dass** die Steuereinrichtung (20) einen an der ersten Schwinge (8a) befestigten Träger (22) aufweist, an welchem die Ventileinrichtung (24) befestigt und/oder das Schaltelement (30) drehbar gelagert ist.

3. Fahrzeugsitz nach einem der vorhergehenden Ansprüche, **dadurch gekennzeichnet, dass** das Schaltelement (30) wenigstens einen Schaltnocken (32) aufweist, welcher bei einer Drehung des Schaltelements (30) die Ventileinrichtung (24) ansteuert.

4. Fahrzeugsitz nach Anspruch 3, **dadurch gekennzeichnet, dass** der Schaltnocken (32) bei einer Drehung des Schaltelements (30) einen Steuerhebel (26) beaufschlagt, welcher schwenkbar an der Ventileinrichtung (24) oder an einem Träger (22) angelenkt ist.

5. Fahrzeugsitz nach Anspruch 4, **dadurch gekennzeichnet, dass** der Steuerhebel (26) aufgrund seiner Beaufschlagung einen Stößel (24b) eines Ventils der Ventileinrichtung (24) beaufschlagt.

6. Fahrzeugsitz nach einem der vorhergehenden Ansprüche, **dadurch gekennzeichnet, dass** eine Rückstellfeder (36) zwischen einerseits dem Schaltelement (30) und andererseits wenigstens mittelbar der ersten Schwinge (8a) wirksam ist, welche insbesondere die Seele (34a) des Mitnehmers (34) relativ zu seiner Hülle (34b) straff hält.

7. Fahrzeugsitz nach einem der vorhergehenden Ansprüche, **dadurch gekennzeichnet, dass** zur Kopplung des Schaltelementes (30) mit der Seele (34a) des Mitnehmers (34) das Schaltelement (30) an der Seele (34a) befestigt oder mit einem Leerweg auf Mitnahme gekoppelt ist.

8. Fahrzeugsitz nach einem der vorhergehenden Ansprüche, **dadurch gekennzeichnet, dass** ein Betätigungselement vorgesehen ist, welches im unbetätigten Zustand den Mitnehmer (34) fixiert, indem es die Seele (34a) relativ zu seiner Hülle (34b) festhält, und welches bei Betätigung die Seele (34a) relativ zur Hülle (34b) verschiebt.

9. Fahrzeugsitz nach einem der vorhergehenden Ansprüche, **dadurch gekennzeichnet, dass** der Mitnehmer (34) wenigstens mit seiner Seele (34a) an der Scherenachse (10) umgelenkt ist.

10. Fahrzeugsitz nach Anspruch 9, **dadurch gekennzeichnet, dass** die Seele (34a) des Mitnehmers (34) über eine Umlenkrolle (35) geführt ist, welche drehbar auf der Scherenachse (10) gelagert ist, wobei die Umlenkrolle (35) insbesondere wenigstens näherungsweise den gleichen Durchmesser wie das Schaltelement (30) aufweist und/oder insbesondere aus zwei Teilen zusammengeclipst ist.

## Claims

1. Vehicle seat, especially utility vehicle seat, comprising
a) a scissors-type stand (3) which is rockable and is height-adjustable, with a gas spring (12) and at least one pair of rockers (8a, 8b) which intersect at a scissors axis (10), and
b) a control device (20) for regulating the level and for adjusting the height of the scissors-type stand (3), said control device having a carrier (34), a switching element (30) coupled to the carrier (34) and a valve device (24) which is activatable by the switching element (30) for activating the gas spring (12), wherein the carrier (34) and the valve device (24) are kinematically assigned to different parts of the scissors-type stand (3) that are movable relative to each other,
**characterized in that**
c) the switching element (30) is mounted rotatably on the first rocker (8a) at a distance from the scissor axis (10),
d) the valve device (24) is fixedly connected to the first rocker (8a), and
e) the carrier (34) is designed as a Bowden cable, the core (34a) of which is coupled to the switching element (30) and the casing (34b) of which is fixedly connected to the second rocker (8b).

2. Vehicle seat according to Claim 1, **characterized in that** the control device (20) has a support (22) which is fastened to the first rocker (8a) and to which the valve device (24) is fastened and/or on which the switching element (30) is mounted rotatably.

3. Vehicle seat according to either of the preceding claims, **characterized in that** the switching element (30) has at least one switching cam (32) which activates the value device (24) upon rotation of the switching element (30).

4. Vehicle seat according to Claim 3, **characterized in that**, upon rotation of the switching element (30), the switching cam (32) acts upon a control lever (26) which is coupled pivotably to the valve device (24) or to a support (22).

5. Vehicle seat according to Claim 4, **characterized in that** the control lever (26), on account of being acted upon, acts upon a tappet (24b) of a valve of the valve device (24).

6. Vehicle seat according to one of the preceding claims, **characterized in that** a resetting spring (36) is effective between the switching element (30) and, at least indirectly, the first rocker (8a) and, in particular, keeps the core (34a) of the carrier (34) taut relative to the casing (34b) thereof.

7. Vehicle seat according to one of the preceding claims, **characterized in that**, in order to couple the switching element (30) to the core (34a) of the carrier (34), the switching element (30) is fastened to the core (34a) or is coupled thereto with dead travel for carrying-along purposes.

8. Vehicle seat according to one of the preceding claims, **characterized in that** there is an actuating element which, in the unactuated state, fixes the carrier (34) by securing the core (34a) relative to the casing (34b) thereof and which, upon actuation, displaces the core (34a) relative to the casing (34b).

9. Vehicle seat according to one of the preceding claims, **characterized in that** the carrier (34) is deflected at least with the core (34a) thereof at the scissor axis (10).

10. Vehicle seat according to Claim 9, **characterized in that** the core (34a) of the carrier (34) is guided via a deflecting roller (35) which is mounted rotatably on the scissor axis (10), wherein the deflecting roller (35) in particular at least approximately has the same diameter as the switching element (30) and/or in particular is clipped together from two parts.

## Revendications

1. Siège de véhicule, en particulier siège de véhicule utilitaire, comprenant
a) un châssis en ciseaux (3) capable de pivoter et pouvant être ajusté en hauteur, comprenant un ressort à gaz (12) et au moins une paire de bras oscillants (8a, 8b), qui se croisent au niveau d'un axe de cisaillement (10), et
b) un dispositif de commande (20) pour la régulation du niveau et l'ajustement en hauteur du châssis en ciseaux (3), lequel dispositif de commande présente un moyen d'entraînement (34), un élément de commutation (30) accouplé au moyen d'entraînement (34) et un dispositif de soupape (24) pouvant être commandé par l'élément de commutation (30) pour commander le ressort à gaz (12), le moyen d'entraînement (34) et le dispositif de soupape (24) étant associés cinématiquement à différentes parties du châssis en ciseaux (3) déplaçables les unes par rapport aux autres,
**caractérisé en ce que**
c) l'élément de commutation (30) est monté de manière à pouvoir tourner sur le premier bras oscillant (8a) à distance de l'axe de cisaillement (10),
d) le dispositif de soupape (24) est connecté fixement au premier bras oscillant (8a), et
e) le moyen d'entraînement (34) est réalisé sous forme de câble Bowden, dont l'âme (34a) est accouplée à l'élément de commutation (30) et dont la gaine (34b) est connectée fixement au deuxième bras oscillant (8b).

2. Siège de véhicule selon la revendication 1, **caractérisé en ce que** le dispositif de commande (20) présente un support (22) fixé au premier bras oscillant (8a), au niveau duquel support le dispositif de soupape (24) est fixé et/ou l'élément de commutation (30) est monté à rotation.

3. Siège de véhicule selon l'une quelconque des revendications précédentes, **caractérisé en ce que** l'élément de commutation (30) présente au moins une came de commutation (32) qui commande le dispositif de soupape (24) lors d'une rotation de l'élément de commutation (30).

4. Siège de véhicule selon la revendication 3, **caractérisé en ce que** la came de commutation (32) sollicite un levier de commande (26) lors d'une rotation de l'élément de commutation (30), lequel levier de commande est articulé de manière pivotante au dispositif de soupape (24) ou à un support (22).

5. Siège de véhicule selon la revendication 4, **caractérisé en ce que** le levier de commande (26) sollicite, sur la base de sa sollicitation, un poussoir (24b) d'une soupape du dispositif de soupape (24).

6. Siège de véhicule selon l'une quelconque des revendications précédentes, **caractérisé en ce qu'**un ressort de rappel (36) agit entre d'une part l'élément de commutation (30) et d'autre part au moins de manière indirecte le premier bras oscillant (8a), lequel ressort de rappel maintient tendue notamment l'âme (34a) du moyen d'entraînement (34) par rapport à sa gaine (34b).

7. Siège de véhicule selon l'une quelconque des revendications précédentes, **caractérisé en ce que** pour l'accouplement de l'élément de commutation (30) à l'âme (34a) du moyen d'entraînement (34), l'élément de commutation (30) est fixé ou est accouplé par entraînement avec une course vide à l'âme (34a).

8. Siège de véhicule selon l'une quelconque des revendications précédentes, **caractérisé en ce qu'**il est prévu un élément d'actionnement qui, dans l'état non actionné, fixe le moyen d'entraînement (34) **en ce qu'**il retient l'âme (34a) par rapport à sa gaine (34b), et qui, lors de l'actionnement, déplace l'âme (34a) par rapport à la gaine (34b).

9. Siège de véhicule selon l'une quelconque des revendications précédentes, **caractérisé en ce que** le moyen d'entraînement (34) est renvoyé au moins avec son âme (34a) au niveau de l'axe de cisaillement (10).

10. Siège de véhicule selon la revendication 9, **caractérisé en ce que** l'âme (34a) du moyen d'entraînement (34) est guidée par le biais d'une poulie de renvoi (35), qui est montée de manière rotative sur l'axe de cisaillement (10), la poulie de renvoi (35) présentant notamment au moins approximativement le même diamètre que l'élément de commutation (30) et/ou étant notamment formée par enclipsage conjoint de deux pièces.
